Europäisches Patentamt

European Patent Office

Office européen des brevets

(11) Veröffentlichungsnummer: **0 282 051**
**A2**

## (12) EUROPÄISCHE PATENTANMELDUNG

(21) Anmeldenummer: 88103792.3

(22) Anmeldetag: 09.03.88

(51) Int. Cl.⁴ **B60H 1/32** , B60P 3/20 , F24F 13/02

(30) Priorität: 12.03.87 DE 3708042
07.09.87 DE 3729952

(43) Veröffentlichungstag der Anmeldung:
14.09.88 Patentblatt 88/37

(84) Benannte Vertragsstaaten:
AT CH ES FR GB IT LI NL SE

(71) Anmelder: Müller, Alex
Parkstrasse 37
D-8023 Pullach(DE)

(72) Erfinder: Müller, Alex
Parkstrasse 37
D-8023 Pullach(DE)
Erfinder: de Zeeuw, Hans
Kieferweg 22
D-4130 Moers 2(DE)

(74) Vertreter: Brose, D. Karl, Dipl.-Ing.
Patentanwälte Brose & Brose Dipl.-Ing. Karl
A. Brose Dipl.-Ing. D. Karl Brose
Wienerstrasse 2 Postfach 146
D-8023 München-Pullach(DE)

(54) **Lastkraftwagen oder -anhänger mit einem durch ein Kühlaggregat am Vorderende durch Luftumwälzung gekühlten Laderaum.**

(57) Die Erfindung betrifft einen Lastkraftwagen (1) oder -anhänger mit einem durch ein Kühlaggregat am Vorderende durch Luftumwälzung gekühlten Laderaum (2). Das Kühlaggreate ist an die Kaltluft im Laderaum verteilende Kanäle (3, 4, 5, 6) angeschlossen. Die Kanäle (3, 4, 5, 6) sind durch Leitungen (7, 8, 9, 10) aus luftdurchlässigen Geweben verschiedener Dichte gebildet. Bevorzugt sind die Leitungen (7, 8, 9, 10) an den von dem Kühlaggregat entferntliegenden Hinterenden (11, 12, 13, 14) geschlossen ausgebildet.

Fig.1

## Lastkraftwagen oder -anhänger mit einem durch ein Kühlaggregat am Vorderende durch Luftumwälzung gekühlten Laderaum.

Die Erfindung betrifft einen Lastkraftwagen oder -anhänger mit einem durch ein Kühlaggregat am Vorderende durch Luftumwälzung gekühlten Laderaum, wobei das Kühlaggregat an die Kaltluft im Laderaum verteilende Kanäle angeschlossen ist.

Derartige Lastkraftwagen und -anhänger sind als Kühlfahrzeuge bekannt, wobei üblicherweise auf der Fahrerkabine ein Verdampfer angeordnet ist, welcher überwiegend durch Umwälzung den Laderaum mit Kälte versorgt.

Bei bekannten Kühlfahrzeugen dieser Art weichen bei Fahrzeuglängen von 12 bis 17 Metern die Wurfweiten der Kühlaggregate nicht aus, um eine ausreichende Kühlung des gesamten Laderaums zu gewährleisten. Es sind daher bei derartigen Kühlfahrzeugen Kanäle vorgesehen, welche durch Bestandteil der Karosserie bildende oder gesondert befestigte Schächte aus Metall gebildet sind, welche mit ihren großen Ausgangsöffnungen an verschiedenen Stellen des Laderaums enden. Diese bekannten Metallschächte als Kanäle bieten erhebliche Probleme beim Zoll und müssen daher nach neueren Bestimmungen in kurzen Abständen mit Revisionsklappen versehen sein, damit eine zollrechtliche Untersuchung erfolgen kann. Darüberhinaus bieten diese bekannten Systeme Vereisungsprobleme und erhebliche Hygieneprobleme, da eine Reinigung kaum möglich ist.

Zum Zwecke der Verteilung der Kaltluft ist es ferner bekannt, an der Decke des Laderaums einen Vorhang aus schwer beschichtetem Gewebe aufzuhängen, welche in regemäßigen Abständen mit Löchern in etwa 5-Markstück-Größe versehen ist, durch welche die Kaltluft nach unten auf die Ladung ausströmen kann. Auch bei diesem bekannten System ist eine ausreichende und gleichmäßige Kühlung des gesamten Laderaums nicht gewährleistet, da die Kaltluft überwiegend im Bereich des Vorderendes des Laderaums aus den großen Löchern herausfällt, während gerade im Bereich der Ladeklappe, an welcher beim Be-und Entladen immer wieder Kaltluft verloren wird und an welcher auch Leckverluste auftreten, kaum eine ausreichende Kälteversorgung gewährleistet ist.

Der Erfindung liegt die Aufgabe zugrunde, einen Lastkraftwagen oder -anhänger der oben genannten Art zu schaffen, bei welcher die Versorgung mit Kaltluft selektiv zu den gewünschten Stellen erfolgen kann und bei welcher die anderen geschilderten Probleme nicht auftreten.

Diese Aufgabe wird erfindungsgemäß dadurch gelöst, daß die Kanäle durch Leitungen aus luftdurchlässigen Geweben verschiedener Dichte gebildet sind.

Es ist offensichtlich, daß durch die Wahl der entsprechenden Dichte über die Längserstreckung des Laderaums bzw. auch bezüglich der Kälteverlusten stärker ausgesetzten Seitenwandungen des Laderaums genau gesteuert werden kann. Dadurch, daß die Kanäle aus einem Gewebe bestehen, ist darüberhinaus bei Zolluntersuchungen ein Abtasten und Durchleuchten möglich, so daß die üblichen Revisionsöffnungen entfallen können. Ferner wird durch das Gewebe gleichzeitig eine gewisse Filterwirkung der Luft erzielt.

Bei einer bevorzugten Ausführungsform nach der Erfindung sind die Leitungen an den von den Kühlaggregaten entferntliegenden Hinterenden geschlossen ausgebildet. Hierdurch ist gewährleistet, daß sich im Betrieb innerhalb der Leitungen ein gewisser Druck aufbaut, welcher im Zusammenhang mit der unterschiedlichen Dichte des Gewebes über die Längserstreckung die genaue Steuerung der Kaltluftversorgung ermöglicht.

Alternativ ist es auch möglich, die Leitungen an den von dem Kühlaggregat entferntliegenden Hinterenden mit einem verengten Querschnitt oder düsenförmig zu gestalten. Grundsätzlich wird hierdurch die gleiche Wirkung erzielt, indem der durch die Verengung oder die Düsen erzeugte Rückstau den ausreichenden Druck im Inneren der Leitungen gewährleistet.

Besonders bevorzugt ist es hierbei, daß zur bedarfsweisen Erhöhung der Kühlleistung im Bereich der Hinterenden Reißverschlüsse in den Leitungen vorgesehen sind, welche bei besonders bevorzugten Ausführungsformen in den auf die Aussenwandungen des Laderaums zuweisenden Seiten der Leitungen angeordnet sind. Bei dieser Ausführungsform kann beispielsweise zum Runterkühlen der Ladung durch Öffnen der Reißverschlüsse eine erheblich erhöhte Kühlleistung erreicht werden, was für die Qualität der transportierten Güter entscheidend sein kann. Andererseits ist es auch umgekehrt möglich, beispielsweise die Kühlung derart auszulegen, daß die Reißverschlüsse im Normalbetrieb offen sind und lediglich beim Be-und Entladen geschlossen werden, um hierdurch Kälteleistung zu sparen.

Bei einer besonders bevorzugten Ausführungsform nach der Erfindung sind die Leitungen als Gewebeschläuche ausgebildet und von der Ecke des Laderaums abgehängt. Hierdurch ist eine einfache Inspektion, beispielsweise beim Zoll, möglich. Ferner bietet diese Ausführungsform den Vorteil, daß bereits vorhandene Kühlfahrzeuge in einfacher Weise ausgerüstet werden können.

Die Leitungen sind bevorzugt derart ausgebildet, daß das Gewebe im Bereich des Vorderendes eine größere Dichte als im Bereich des Hinterendes aufweist. Hierdurch wird gerade der größeren Kälteverlusten ausgesetzte hintere Bereich des Laderaums besser mit Kaltluft versorgt.

Bei einer bevorzugten Weiterbildung nach der Erfindung sind mindestens drei Leitungen parallel zueinander und zur Hauptachse des Laderaums vorgesehen, wobei vorzugsweise das Gewebe der außenliegenden Leitungen im Bereich ihrer Vorderenden eine größere Dichte als die vorderen Bereiche der innenliegenden Leitungen aufweist. Hierdurch ist eine verbesserte Versorgung der Seitenwandbereiche des Laderaums mit Kaltluft sichergestellt.

Die Dichte der die Leitungen bildenden Gewebe ist vorzugsweise in diskreten Abschnitten geändert. Diese Ausführungsform bietet den Vorteil, daß sich derartige Leitungen durch Vernähen oder Verkleben verschiedener Längenabschnitte unterschiedlicher Gewebe herstellen lassen.

Bei Ausführungsformen, bei denen die Dichte des die Leitung bildenden Gewebes in diskreten Abschnitten geändert ist, ist es von Vorteil, diese Abschnitte getrennt voneinander auszubilden und durch Reißverschlüsse miteinander zu verbinden. Hierdurch kann das Kühlsystem leicht an geänderte Anforderungen angepaßt werden, indem lediglich derartige Abschnitte gegen Abschnitte mit einer anderen Dichte ausgetauscht werden.

Bei einer alternativen Ausführungsform ist die Dichte des die Leitungen bildenden Gewebes über die Länge stetig geändert.

Bei einer besonders bevorzugten Ausführungsform nach der Erfindung sind die Leitungen an der Decke des Laderaums mittels Klettverschlüssen befestigt. Hierbei ist es von besonderem Vorteil die Klettverschlüsse als parallel zur Hauptachse des Laderaums an der Decke des Laderaums ange klebte Krallen-oder Hakenbänder und an den Leitungen entlang deren Längsachsen angenähte oder geklebte Flauschbänder auszubilden. Diese Ausführungsform gewährleistet eine besonders einfache Montage und Demontage, wobei ohne Bohrungen und dergleichen ausgekommen werden kann, da moderne Klebstoffe ein Ankleben der Krallen oder Hakenbänder direkt an das Metall gestatten.

Bei einer alternativen Ausbildungsform nach der Erfindung sind parallel zur Hauptachse des Laderaums an der Decke des Laderaums verlaufende Drähte oder Drahtseile vorgesehen, an welchen die Leitungen abnehmbar aufgehängt sind. Hierdurch ist eine einfache Reparatur möglich, wobei ferner der Vorteil erzielt wird, daß die Leitungen zur Verbesserung der Hygiene unabhängig vom Fahrzeug gewaschen werden können.

Bevorzugt ist es ferner, daß an der Vorderwand des Laderaums ein an das Kühlaggregat angeschlossener Adapter vorgesehen ist, an welchen die Leitungen abnehmbar angeschlossen sind.

Weitere vorteilhafte Einzelheiten sind aus den Unteransprüchen ersichtlich.

Im folgenden wird die Erfindung anhand einer in den Zeichnungen beispielhaft veranschaulichten Ausführungsform näher erläutert. Es zeigt:

Fig. 1 eine skizzenhafte Schnittansicht in horizontaler Ebene und in Richtung der Decke des Laderaums eines Kühlfahrzeugs nach der Erfindung längs der Linie I-I von Fig. 2,

Fig. 2 eine Schnittansicht ebenfalls in schematischer Darstellung längs der Linie II-II von Fig. 1, und

Fig. 3 eine perspektivische Prinzipskizze einer besonders bevorzugten Ausführungsform.

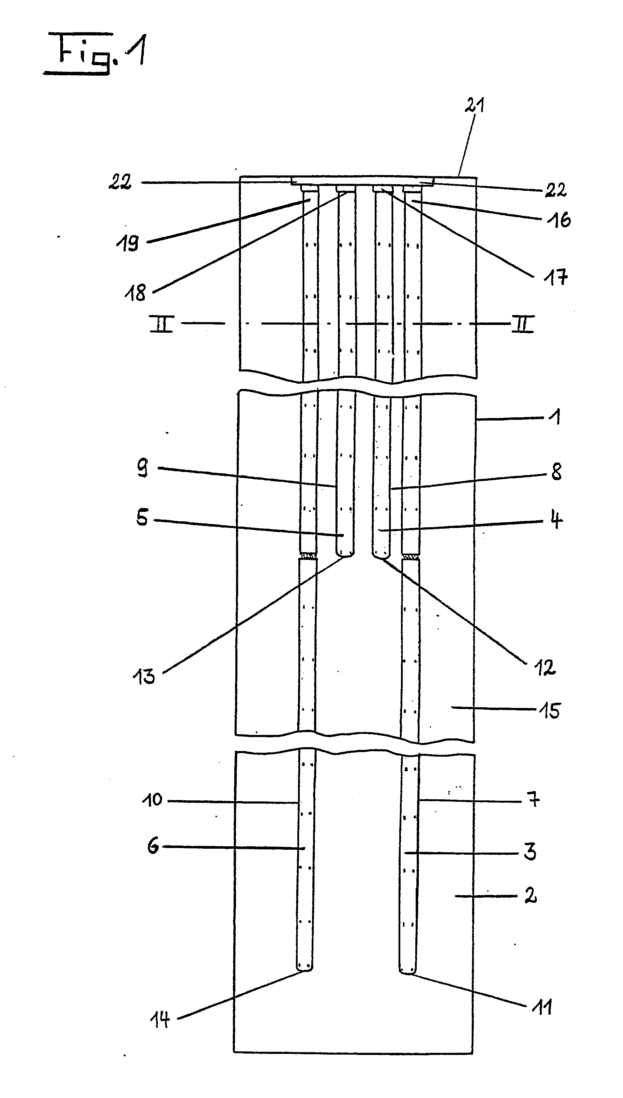

Fig. 1 zeigt lediglich den Laderaumbereich eines allgemein mit 1 bezeichneten Lastkraftwagens oder -anhängers in Richtung der Decke 15 des Laderaums 2. Der Laderaum 2 wird durch ein nicht dargestelltes Kühlaggregat mit Kaltluft versorgt, welches bei einem Lastkraftwagen üblicherweise oben auf dem Fahrerhaus sitzt.

Das Kühlaggregat ist an in Richtung der Hauptachse des Laderaums parallel zueinander verlaufende Kanäle 3, 4, 5, 6 angeschlossen, durch welche die Kaltluft im Laderaum 2 verteilt wird.

Bei dem dargestellten Ausführungsbeispiel sind die Kanäle 3, 4, 5, 6 durch Leitungen 7, 8, 9, 10 gebildet, welche aus luftdurchlässigen Geweben bestehen, wobei die Dichte der jeweiligen Gewebe über die Längserstreckung der Leitungen 7, 8, 9, 10 unterschiedlich ist.

An den von dem Kühlaggregat (nicht dargestellt) entferntliegenden Hinterenden 11, 12, 13, 14 sind die Leitungen 7, 8, 9, 10 geschlossen ausgebildet, um zu gewährleisten, daß die Leitungen 7, 8, 9, 10 im Inneren einen ausreichenden Druck aufbauen. Bei alternativen Ausführungsformen können diese Hinterenden 11, 12, 13, 14 auch lediglich im Querschnitt verengt sein oder mit Düsen versehen sein, solange gewährleistet ist, daß im Inneren der Leitungen 7, 8, 9, 10 ein ausreichender Druck herrscht, welcher die Kaltluft durch die aus Gewebe bestehenden, porösen Wandungen der Leitungen 7, 8, 9, 10 hindurchströmen läßt.

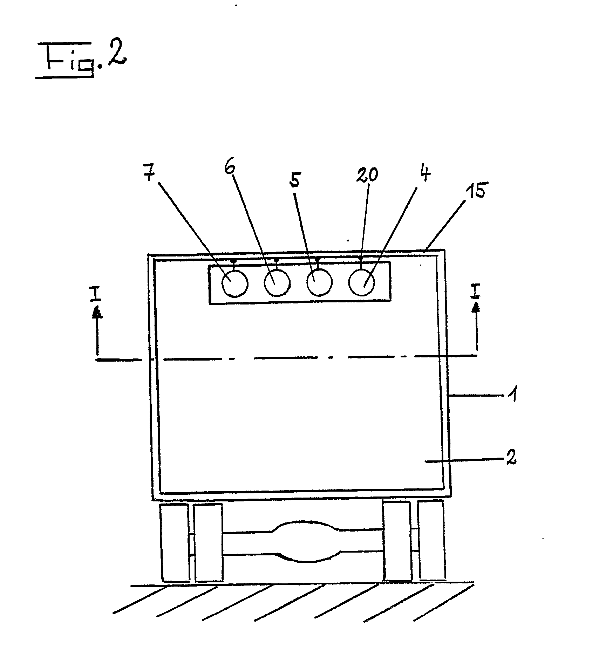

Wie auch insbesondere aus Fig. 2 ersichtlich, sind die Leitungen 7, 8, 9, 10 als Gewebeschläuche ausgebildet, welche von der Decke des Laderaums 2 abgehängt sind.

Bei bevorzugten Ausführungsformen ist das Gewebe der Leitungen 7, 8, 9, 10 im Bereich des Vorderendes 16, 17, 18, 19 derart ausgebildet, daß hier eine größere Dichte des Gewebes vorliegt als im Bereich der Hinterenden 11, 12, 13, 14,

Dadurch wird sich bei ausreichendem Druck die Kaltluft besser über die Länge des Laderaums 2 verteilen, indem die hinteren Bereiche der Leitungen mit ausreichenden Kaltluftmengen versorgt werden, welche aufgrund der größeren Dichte des Gewebes vorne in geringeren Mengen ausströmen kann.

Wie gezeigt, sind längs der Decke 15 des Laderaums 2 vier zur Hauptachse des Laderaums 2 und zueinander parallel verlaufende Leitungen 7, 8, 9, 10 vorgesehen, wobei das Gewebe der außenliegenden Leitungen 7 und 10 im Bereich ihrer Vorderenden 16, 19 eine größere Dichte aufweist als das Gewebe der innenliegenden Leitungen 8, 9 im Bereich ihrer Vorderenden 17, 18. Durch diese Art der Verteilung der Dichte des Gewebes für die Leitungen 7, 8, 9, 10 wird für eine erhöhe Kühlleistung im Bereich derSeitenwandungen des Laderaums 2 gesorgt.

Bei dem in Fig. 1 und 2 veranschaulichten Ausführungsbeispiel ist die Dichte des die Leitungen 7, 8, 9, 10 bildenden Gewebes in diskreten Abschnitten A und B geändert, wobei es sich jedoch in der Praxis auch als vorteilhaft erweisen kann, das Gewebe bereits bei der Herstellung so zu gestalten, daß sich die Dichte über die Länge ändert.

Bei der in den Fig. 1 und 2 veranschaulichten Ausführungsform sind die Leitungen 7, 8, 9, 10 an Drähten oder Drahtseilen 20 aufgehängt, welche nahe an der Decke 15 des Laderaums 2 verlaufen. Die Aufhängung ist hierbei derart gestaltet, daß die Leitungen 7, 8, 9, 10 abgenommen werden können.

Zum gleichen Zwecke ist in der Vorderwand 21 des Laderaums 2 ein an das Kühlaggregat angeschlossener Adapter 22 vorgesehen, an welchen die Vorderenden 16, 17, 18, 19 abnehmbar angeschlossen sind.

Aufgrund dieser Konstruktion können daher nach längerem Gebrauch die Leitungen 7, 8, 9, 10 vollständig aus dem Laderaum entfernt und außerhalb gewaschen und wenn nötig auch repariert werden.

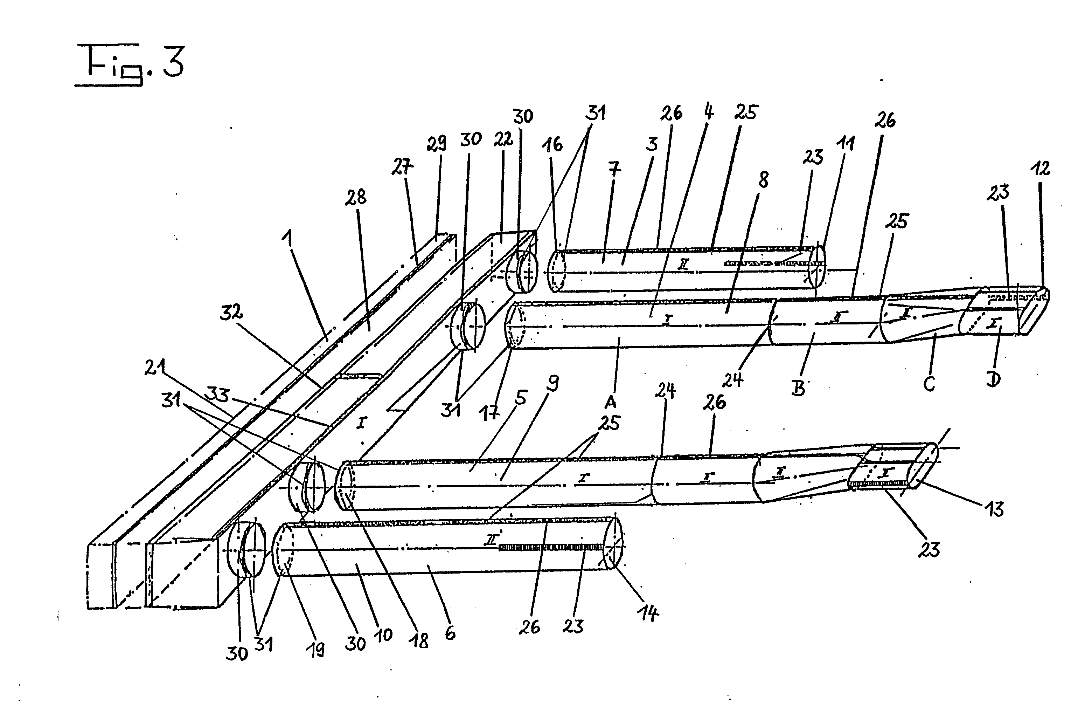

Eine besonders bevorzugte Ausführungsform zur Erzielung dieses Zwecks ist in Figur 3 in perspektivischer Darstellung skizzenhaft veranschaulicht, wobei für gleiche Teile gleiche Bezugszeichen wie in Figur 1 und 2 gewählt wurden, so daß hinsichtlich dieser Einzelheiten auf die oben stehende Beschreibung verwiesen werden kann.

Bei der Ausführungsform gemäß Figur 3 sind die Leitungen 7, 8, 9, 10 derart ausgebildet, daß sich die Dichte des die Leitungen 7, 8, 9, 10 bildenden Gewebes in diskreten Abschnitten ändern.

Wie veranschaulicht bestehen hierbei die Leitungen 7, 8, 9, 10 aus zwei Gewebearten, welche in Figur 3 mit I bzw. II bezeichnet sind, wobei die Gewebeart II eine geringere Dichte aufweist als dieGewebeart I.

Die beiden im Bereich der Seitenwände des Laderaums 2 liegenden Leitungen 7 und 10 bestehen lediglich aus der Gewebeart II, während die in der Mitte liegenden beiden Leitungen 8 und 9 aus den Abschnitten A, B, C, und D bestehen.

Der Abschnitt A ist jeweils mit dem Abschnitt B über einen Reißverschluß 24 verbunden, so daß sich derartige Abschnitte austauschen lassen.

Wie ferner in Figur 3 gezeigt, ist bei sämtlichen Leitungen im Bereich der Hinterenden 11, 12, 13, 14 in der auf die Seitenwandungen des Laderaums 2 zuweisenden Seite ein Reißverschluß 23 vorgesehen, mittels dessen sich, wie oben erwähnt, die Kühlleistung beeinflussen läßt.

Um die Leitungen 7, 8, 9 zu reinigen oder zu reparieren sind diese bei dem bevorzugten Ausführungsbeispiel an der Decke 15 des Laderaums 2 mittels Klettverschlüssen 25 befestigt.

Die Klettverschlüsse 25 bestehen aus parallel zur Hauptachse des Laderaums unmittelbar an die Decke 15 angeklebten Krallen oder Hakenbändern (nicht dargestellt) und an den Leitungen 7, 8, 9, 10 längs deren Längsachsen angenähten Flauschbändern 26, welche jedoch auch auf die Leitungen 7, 8, 9, 10 aufgeklebt sein können.

Wie ferner veranschaulicht ist bei dieser in Figur 3 gezeigten Ausführungsform der Adapter 22 ebenfalls mittels Reißverschlüssen 27 an dem den Auslaß 28 des Kühlaggregats umgebenden Rahmen 29 befestigt.

Zu diesem Zweck weist der Adapter 22 auf seiner Innenseite einen Klettverschluß 32 auf, welcher mit dem entsprechenden Flausch-oder Hakenband an dem Rahmen 29 in Eingriff gelängt. Bevorzugt ist hierbei das Krallen-oder Hakenband an den Rahmen 29 angeklebt und das Flauschband des Klettverschlusses 32 auf der Innenseite des ebenfalls aus einem Gewebe bestehenden Adapters 22 angenäht.

Zusätzlich weist der Adapter 22 auf seiner Aussenseite einen Klettverschluß 33 auf, mittels dessen der Adapter 22 ebenfalls an der Decke 15 des Laderaums 2 aufgehängt werden kann.

Der Adapter 22 ist bei der in Figur 3 veranschaulichten Ausführungsform mit einer Anzahl von Anschlußstutzen 30 für die Leitungen 7, 8, 9, 10 versehen, wobei zwischen den Vorderenden 16, 17, 18, 19 und den Anschlußstutzen 30 die Verbindung über Reißverschlüsse 31 hergestellt wird.

Sämtliche aus der Beschreibung, den Ansprüchen und Zeichnungen hervorgehenden Merkmale und Vorteile der Erfindung einschließlich konstruktiver Einzelheiten und räumlicher Anordnungen, können sowohl für sich als auch in beliebiger Kombination erfindungswesentlich sein.

**Ansprüche**

1. Lastkraftwagen oder -anhänger mit einem durch ein Kühlaggregat am Vorderende durch Luftumwälzung gekühlten Laderaum, wobei das Kühlaggregat an die Kaltluft im Laderaum verteilende Kanäle angeschlossen ist, **dadurch gekennzeichnet,** daß die Kanäle (3, 4, 5, 6) durch Leitungen (7, 8, 9, 10) aus luftdurchlässigen Geweben verschiedener Dichte gebildet sind.

2. Lastkraftwagen nach Anspruch 1, dadurch gekennzeichnet, daß die Leitungen (7, 8, 9, 10) an den von den Kühlaggregaten entfernt liegenden Hinterenden geschlossen ausgebildet sind.

3. Lastkraftwagen nach Anspruch 1, dadurch gekennzeichnet, daß die Leitungen (7, 8, 9, 10) an den von dem Kühlaggregat entfernt liegenden Hinterenden im Querschnitt verengt oder düsenförmig gestaltet sind.

4. Lastkraftwagen nach einem der vorstehenden Ansprüche, dadurch gekennzeichnet, daß zur bedarfsweisen Erhöhung der Kühlleistung im Bereich der Hinterenden (11, 12, 13, 14) der Leitungen (7, 8, 9, 10) Reißverschlüsse (23) vorgesehen sind.

5. Lastkraftwagen nach Anspruch 4, dadurch gekennzeichnet, daß die Reißverschlüsse (23) in den auf die Außenwände des Laderaums (2) zuweisenden Seiten der Leitungen (7, 8, 9, 10) angeordnet sind.

6. Lastkraftwagen nach einem der vorstehenden Ansprüche, dadurch gekennzeichnet, daß die Leitungen (7,8,9,10) als Gewebeschläuche ausgebildet sind,und an der Decke (15) des Laderaums (2) aufgehängt sind.

7. Lastkraftwagen nach einem der vorstehenden Ansprüche, dadurch gekennzeichnet, daß die Leitungen (7,8,9,10) derart ausgebildet sind, daß das· Gewebe im Bereich der Vorderenden (16,17,18,19) eine größere Dichte als im Bereich der Hinterenden (11,12,13,14) aufweist.

8. Lastkraftwagen nach einem der vorstehenden Ansprüche, dadurch gekennzeichnet, daß mindestens drei Leitungen (7,8,9,10) parallel zueinander und zur Hauptachse des Laderaums (2) vorgesehen sind.

9. Lastkraftwagen nach Anspruch 8, dadurch gekennzeichnet, daß das Gewebe der außenliegenden Leitungen (7,10) im Bereich ihrer Vorderenden (16,19) eine größere Dichte als die vorderen Bereiche der innenliegenden Leitungen (8,9) aufweist.

10. Lastkraftwagen nach einem der vorstehenden Ansprüche, dadurch gekennzeichnet, daß die Dichte des die Leitungen (7,8,9,10) bildenden Gewebes in diskreten Abschnitten (A,B) geändert ist.

11. Lastkraftwagen nach Anspruch 10, dadurch gekennzeichnet, daß die Abschnitte (A,B,C,D) getrennt voneinander ausgebildet und durch Reißverschlüsse (24) miteinander verbunden sind.

12. Lastkraftwagen nach einem der Ansprüche 1 bis 8, dadurch gekennzeichnet, daß die Dichte des die Leitungen (7,8,9,10) bildenden Gewebes stetig geändert ist.

13. Lastkraftwagen nach einem der vorstehenden Ansprüche, dadurch gekennzeichnet, daß die Leitungen (7,8,9,10) an der Decke (15) des Laderaums (2) mittels Klettverschlüssen (25) befestigt sind.

14. Lastkraftwagen nach Anspruch 13, dadurch gekennzeichnet, daß die Klettverschlüsse als parallel zur Hauptachse des Laderaumes (2) an der Decke (15) des Laderaumes (2) angeklebte Krallen- oder Hakenbänder (nicht dargestellt) und an den Leitungen (7,8,9,10) entlang deren Längsachse angenähte oder geklebte Flauschbänder (26) ausgebildet sind.

15. Lastkraftwagen nach einem der vorstehenden Ansprüche 1 bis 11, dadurch gekennzeichnet, daß parallel zur Hauptachse des Laderaums (2) an der Decke (15) des Laderaumes (2) verlaufende Drähte oder Drahtseile (20) vorgesehen sind, an welchen die Leitungen (7,8,9,10) abnehmbar aufgehängt sind.

16. Lastkraftwagen nach einem der vorstehenden Ansprüche, dadurch gekennzeichnet, daß in der Vorderwand (21) des Laderaums (2) ein an das Kühlaggregat angeschlossener Adapter (22) vorgesehen ist, an welchen die Leitungen (7,8,9,10) abnehmbar angeschlossen sind.

17. Lastkraftwagen nach Anspruch 16, dadurch gekennzeichnet, daß der Adapter (22) mittels Klettverschlüssen (27) an einen den Auslaß (28) des Kühlaggregats umgebenden Rahmen (29) befestigt sind.

18. Lastkraftwagen nach Anspruch 16 oder 17, dadurch gekennzeichnet, daß der Adapter (22) mit einer Anzahl von Anschlußstutzen (30) für die Leitungen (7,8,9,10) versehen ist.

19. Lastkraftwagen nach Anspruch 18, dadurch gekennzeichnet, daß die Leitungen (7,8,9,10) mit den Anschlußstutzen (30) über Reißverschlüsse (31) verbunden sind.

20. Lastkraftwagen nach einem der vorstehenden Ansprüche 16 bis 19, dadurch gekennzeichnet, daß der Adapter (22) auf seiner Innenseite einen Klettverschluß (32) zum Anschluß an den Rahmen (29) und auf seiner Außenseite einen Klettverschluß (33) zur Aufhängung des Adapters (22) an der Decke (15) aufweist.

Fig. 1

Fig.2

Fig. 3